Europäisches Patentamt

European Patent Office

Office européen des brevets

(11) Veröffentlichungsnummer: **0 423 609 A1**

## (12) EUROPÄISCHE PATENTANMELDUNG

(21) Anmeldenummer: 90119437.3

(22) Anmeldetag: 10.10.90

(51) Int. Cl.5: **B01D 63/08**

(30) Priorität: 17.10.89 DE 3934564

(43) Veröffentlichungstag der Anmeldung:
24.04.91 Patentblatt 91/17

(84) Benannte Vertragsstaaten:
CH LI NL

(71) Anmelder: SARTORIUS AG
Weender Landstrasse 94-108
W-3400 Göttingen(DE)

(72) Erfinder: Schmidt, Hans-Weddo
Alte Uslaerstrasse 26 d
W-3414 Hardegsen(DE)
Erfinder: Dohrmann, Michael
Allensteiner Weg 3
W-3407 Gleichen(DE)

(74) Vertreter: Köhler, Rudolf
c/o Sartorius AG Weender Landstrasse
94-108
W-3400 Göttingen(DE)

(54) Filterstapel für den Einbau in einer nach dem Crossflow-Prinzip betreibbaren Filtervorrichtung für Fluide.

(57) Bei einer nach dem Crossflow-Prinzip betreibbaren Filtervorrichtung für Fluide mit einem von zwei Endplatten (9,2), von denen mindestens eine Fluidanschlüsse (3,4,5) aufweist, in Dichtlage gehaltenen Filterstapel (32) aus runden Flachfilterelementen (41) und alternierend angeordneten, kongruenten, drainierenden Stützelementen (38), ist die die Fluidanschlüsse (3,4,5) aufweisende Endplatte (2) Teil eines den Filterstapel (32) umschließenden Gehäuses (1,2) und die periphere Anströmung des Filterstapels (32) erfolgt über einen Gehäuseringraum (11). Der Filterstapel (32) ist etwa in Durchmesserrichtung von einem schlitzartigen Schacht (30,30') zur Fluidführung des Retentats durchsetzt, der in der die Fluidanschlüsse (3,4,5) aufweisenden Endplatte (2) mündet. Im diametralen Endbereich der von dem schlitzartigen Schacht (30,30') nicht erfaßten Stapelfläche ist mindestens ein Permeatschacht (31) zur Abführung des Permeats aus der Ebene der Filterelemente (41) angeordnet, wobei die Permeatschächte (31) in der Endplatte (2) mit Anschlüssen (3,4,5) münden. Die das partikelbelastete Fluid führenden Stützelemente (38) sind durch Überströmplatten (38) mit beidseitig angeordneten, quer zum schlitzartigen Schacht (30,30') verlaufenden Überströmkanälen (39) gebildet und jeweils zwei Filterzuschnitte (36) sind unter drainierender Beabstandung mittels eines Drainagevlieses (37) oder Gitters zwischen jeweils zwei Überströmplatten (38) zur Führung des Retentats und des Permeats angeordnet. Durch die Filtervorrichtung lassen sich preisgünstig partikelgängige, mit hohen Feststoffanteilen behafteten Flüssigkeiten filtrieren.

Fig. 1

EP 0 423 609 A1

Fig. 8

# FILTERSTAPEL FÜR DEN EINBAU IN EINER NACH DEM CROSSFLOW-PRINZIP BETREIBBAREN FILTERVORRICHTUNG FÜR FLUIDE

Die Erfindung betrifft einen Filterstapel für den Einbau in eine nach dem Crossflow-Prinzip betreibbaren Filtervorrichtung für Fluide nach dem Oberbegriff des Hauptanspruches, wie sie z.B. durch die DE-OS 33 41 262 bekannt ist. Das darin beschriebene stapelförmige Trennelement aus geschichteten Zuschnitten zwischen zwei Endplatten ist bezüglich seiner Strömungsführung noch verbesserungswürdig, wenn es darum geht, einen möglichst geringen Druckabfall zwischen Retentateingang und Retentatausgang zu erreichen, ohne daß dies zu Lasten der Filtrationsleistung geht.

Gerade bei der Filtration von Flüssigkeiten mit hohen $CO_2$-Gehalt wie Bier, stark $CO_2$-haltigen Fruchtsäften und dergleichen ist zur Vermeidung einer $CO_2$-Entgasung aus der Flüssigkeit ein gewisser Druck auf der Filtratseite erforderlich. Dies bedingt ein höheres Druckniveau auf der Retentatseite um die Filtration überhaupt zu ermöglichen, d.h. das gesamte Filtrationssystem muß nach außen druckstabil sein.

Aufgrund der relativ kleinen Durchbrechungen in dem stapelförmigen Trennelement nach DE-OS 33 41 262, wird eine ausreichende Überströmung der Membran durch den starken Druckabfall zwischen Retentateingang und Retentatausgang behindert; dies hat unter Umständen einen schnellen Aufbau einer Deckschicht und damit sinkende Filtrationsleistungen zur Folge, insbesondere aber neigen die Anströmöffnungen zur Verblockung bei Medien mit hohem Feststoff- bzw. Partikelanteil, wie z.B. Fruchtsäfte und auch bei der Filtration von hochviskosen Flüssigkeiten wie Milch und Molke.

Es ist auch bekannt (DE-GM 87 00 793), glokkenförmige Filterelemente aus Keramik axial mit Abstand um einen davon gebildeten Hohlkern in einem umgehenden Druckgehäuse zu stapeln, und die zwischen den glockenförmigen Filterelementen auf der Außen- und Innenseite gebildeten Spalte in Richtung der Mantellinien nach dem Crossflow-Prinzip zu überströmen. Der Filtratabzug erfolgt aus kranzförmigen Hohlräumen der Keramikkörper. Aufgrund der besonderen Formgebung ist die Herstellung auf feste bzw. formstabile Materialien beschränkt und sehr kompliziert.

Der Erfindung liegt daher die Aufgabe zugrunde, mit einfachen konstruktiven Mitteln eine Filtervorrichtung der eingangs genannten Bauart, insbesondere zur Filtration von Medien mit hohem Feststoff- bzw. Partikelanteil zu schaffen, die mit höherem Betriebsdruck betrieben werden kann und bei der der Druckabfall innerhalb der Strömungswege relativ gering ist und bei dem der Einsatz verschiedenartiger Trennmedien nach dem gleichen Abdichtungsprinzip der einzelnen Elemente möglich ist.

Diese Aufgabe wird erfindungsgemäß durch die im Hauptanspruch angegebenen Merkmale gelöst. Vorteilhafte Weiterbildungen sind in den Unteransprüchen angegeben.

Zusammenfassend besteht die Erfindung aus einem Filtergehäuse mit Filterstapel bzw. einem Filterstapel zur bestimmungsgemäßen Verwendung in einem Filtergehäuse mit nachstehenden Merkmalen.

Bei einer nach dem Crossflow-Prinzip betreibbaren Filtervorrichtung für Fluide mit einem von zwei Endplatten, von denen mindestens eine Fluidanschlüsse aufweist, in Dichtlage gehaltenen Filterstapel aus runden Flachfilterelementen und alternierend angeordneten, kongruenten, drainierenden Stützelementen, ist die die Fluidanschlüsse aufweisende Endplatte Teil eines den Filterstapel umschließenden Gehäuses und die periphere Anströmung des Filterstapels erfolgt über einen Gehäuseringraum. Der Filterstapel ist etwa in Durchmesserrichtung von einem schlitzartigen Schacht zur Fluidführung des Retentats durchsetzt, der in der die Fluidanschlüsse aufweisenden Endplatte mündet. Im diametralen Endbereich der von dem schlitzartigen Schacht nicht erfaßten Stapelfläche ist mindestens ein Permeatschacht zur Abführung des Permeats aus der Ebene der Filterelemente angeordnet, wobei die Permeatschächte in der Endplatte mit Anschlüssen münden. Die das partikelbelastete Fluid führenden Stützelemente sind durch Überströmplatten mit beidseitig angeordneten, quer zum schlitzartigen Schacht verlaufenden Überströmkanälen gebildet und jeweils zwei Filterzuschnitte sind unter drainierender Beabstandung mittels eines Drainagevlieses oder Gitters zwischen jeweils zwei Überströmplatten zur Führung des Retentats und des Permeats angeordnet. Da die Summe der Anströmquerschnitte in der schlitzförmigen Durchbrechung etwa gleich der der äußeren Anströmquerschnitte im äußeren Retentatraum sind, ist auch problemlos eine Feedumkehr ohne Druckerhöhung im inneren Retentatschacht vorzunehmen, möglich. Durch die Filtervorrichtung lassen sich preisgünstig partikelgängige, mit hohen Feststoffanteilen behafteten Flüssigkeiten filtrieren.

Ein Ausführungsbeispiel der vorliegenden Erfindung ist in der beiliegenden Zeichnung dargestellt. Dabei zeigt:

Fig. 1 schematisch einen Vertikalschnitt durch eine Filtervorrichtung für Fluide,

Fig. 2 eine Draufsicht auf eine Überströmplatte,

Fig. 3 einen Querschnitt durch die Überströmplatte nach der Schnittlinie 3-3 in Fig. 2,

Fig. 4 eine Draufsicht auf eine Druckverteilungsmaske,

Fig. 5 eine Draufsicht auf das mehrschichtige Filterelement,

Fig. 6 einen Querschnitt durch das Filterelement nach der Linie 6-6 in Fig. 5,

Fig. 7 einen Längsschnitt durch das Filterelement nach der Linie 7-7 in Fig. 5 und

Fig. 8 einen Vertikalschnitt durch einen Teil des Filterstapels etwa nach der Übersichtszeichnung gemäß Fig. 1. bzw. nach den Schnittlinien 3-3 und 7-7.

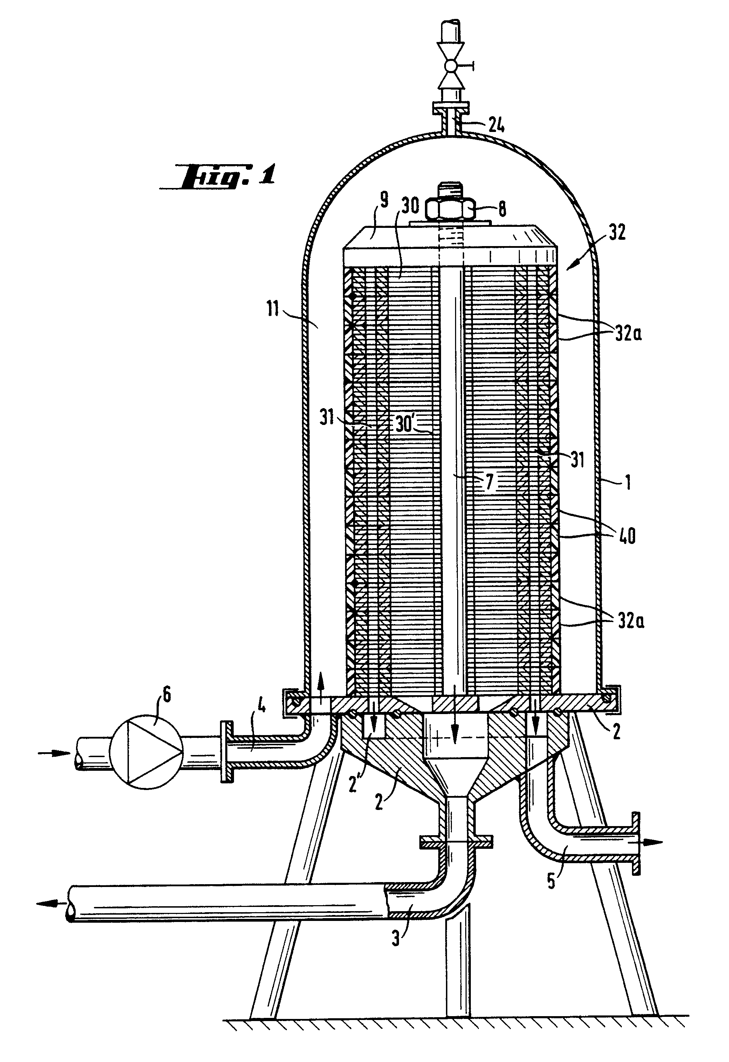

Die Filtervorrichtung gemäß Fig. 1 besteht im wesentlichen aus einem glockenförmigen Gehäuseoberteil 1, einem damit über Spannelemente mit Dichtungen lösbar verbundenen Gehäuseunterteil 2, welches bevorzugt die Fluidanschlüsse 3, 4,5 aufweist. Das Gehäuse 1,2 wird über eine Fluidpumpe 6 mit Flüssigkeit über den Anschluß 4 versorgt und diese überströmt bevorzugt von außen nach innen den im Gehäuse 1,2 im Retentatraum 11 angeordnete Filterstapel 32. Das aufkonzentrierte Retentat verläßt durch den zentralen Retentatraum 30 über den Anschluß 3 den Filterstapel 32 und das Gehäuse 1,2. Das die Filterelemente 41 durchdringende Permeat verläßt den Filterstapel 32 durch die Permeatschächte 31 und den Permeatauslaß 5 in der unteren Endplatte 2. Ein im Gehäuseunterteil 2 angeordneter Ringraum 2′ verbindet alle in den Zeichnungen angegebenen Permeatdurchlässe bzw. Permeatschächte 31 mit dem Permeat auslaß 5. Der gesamte Filterstapel 32 wird durch eine Druckplatte 9 als obere Endplatte und einem mit der unteren Endplatte 2 verbundenen Spannbolzen 7 mit Mutter 8 auf Dichtlage gehalten. Die Mutter 8 kann auch durch einen Spanntrieb gemäß DE-OS 37 80 733 ersetzt sein, welcher Expansionskräfte des Filterstapels 32 kompensiert. Über dem Anschluß 24 ist das Gehause 1,2 entlüftbar.

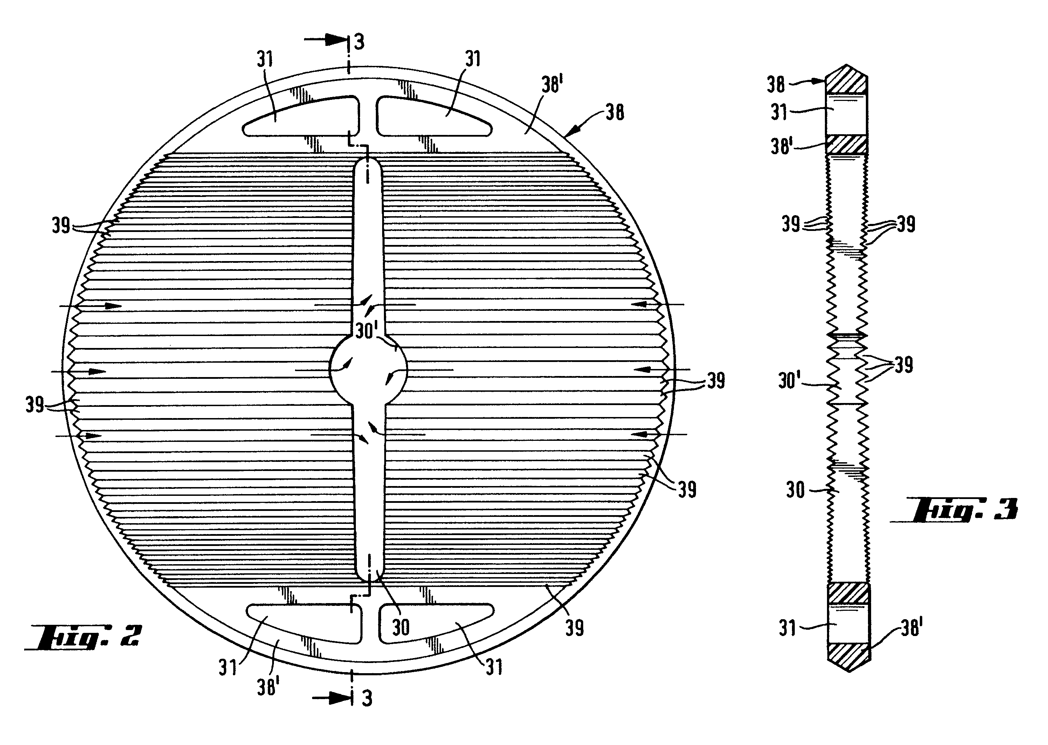

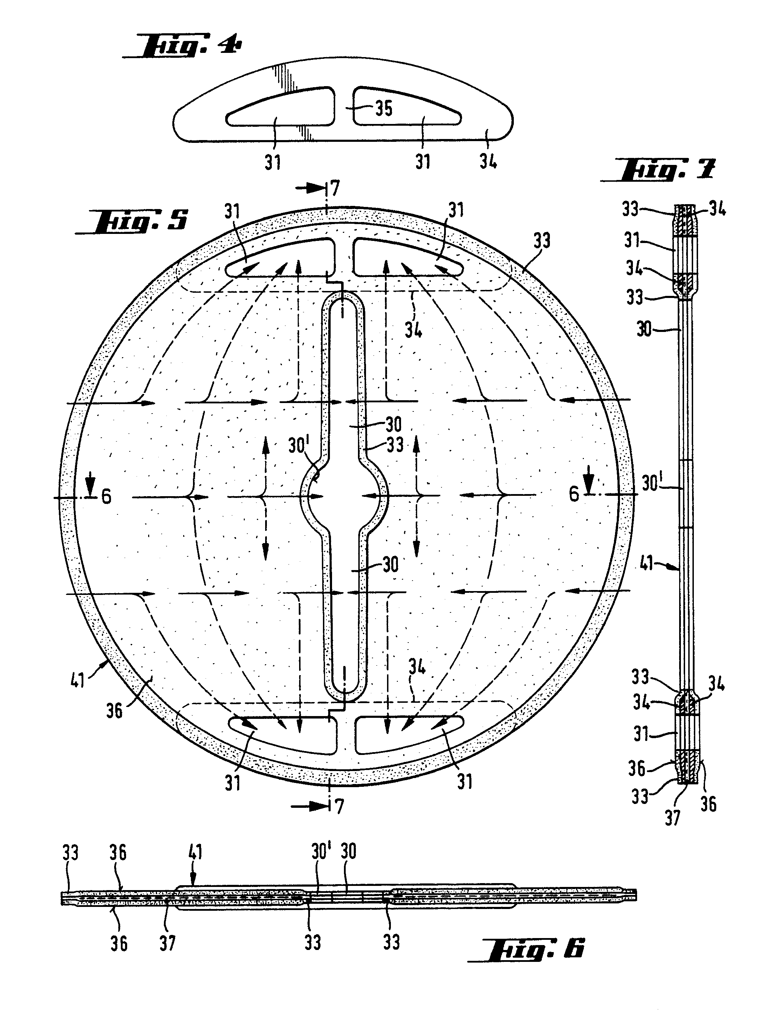

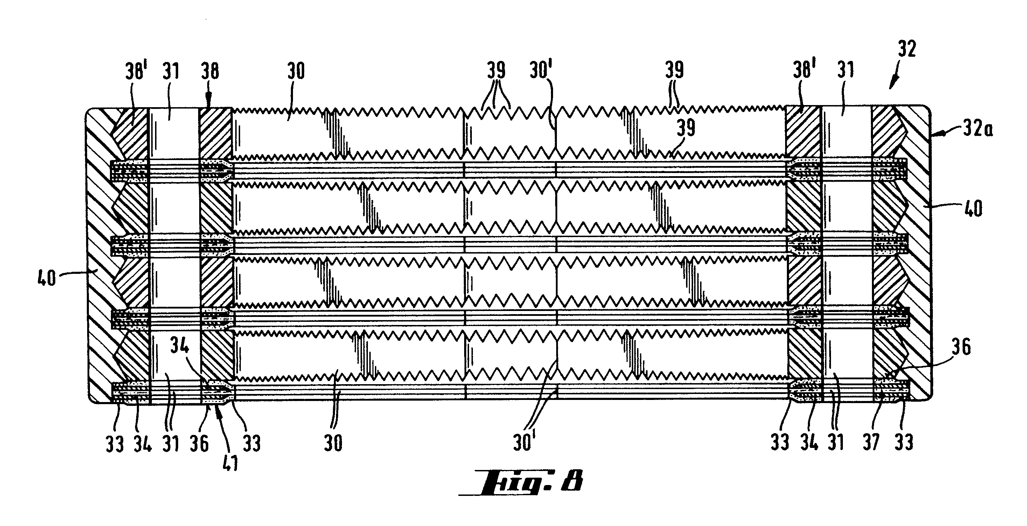

In Fig. 2 bis 8 sind die verschiedenen Einzelelemente dargestellt. Bezogen auf eine gemäß Fig. 1 von oben beginnende Schichtenfolge besteht diese aus einer Überströmplatte 38 nach Fig. 2,3 welche eine zentrale schlitzförmige Durchbrechung 30,30′ und mehrere über den Umfang im Endbereich dieser Durchbrechung 30,30′ angeordnete Durchbrechungen 31 für das Permeat aufweist.

Die Durchbrechungen 31 sind durch ebene Plattenkränze 38′ als Pressdichtung eingefaßt.

Unter dieser oberen, gegebenenfalls mit einer äußeren glatten Oberfläche ausgestatteten Überströmplatte 38 ist ein Filterelement gemäß Fig. 5 bis 7 angeordnet, dessen Lochbild bezüglich der Durchbrechungen 30,30′,31 mit dem der Überströmplatte 38 übereinstimmt. Dieses Filterelement 41 besteht aus einem oberen und unteren Flachfilterzuschnitt 36 und einem sandwichartig dazwischen liegenden, drainierenden Vlies 37 oder einem Gewebe, deren periphere Ränder einschließlich im Bereich der zentralen schlitzförmigen Durchbrechung 30 durch Verschweißung oder Klebung als Dichtung 33 leckdicht verbunden sind. Bedarfsweise ist zwischen drainierender Stützschicht 37 in Form eines Vlieses oder Gewebes und Flachfilterzuschnitten 36 beidseitig eine Druckverteilungsmaske 34 angeordnet, die sicherstellt, daß das Permeat in der Ebene der drainierenden Stützschicht 37 ungehindert in die Durchbrechungen 31 zur Permeatabführung fließen kann, wie in Fig. 5 schematisch angedeutet. Die Druckverteilungsmaske weist eine mit den Durchbrechungen 31 des Filterelementes 41 deckungsgleiche Ausnehmung 31 mit einem Mittelsteg 35 auf. Die Druckverteilungsmaske 34 ist zweckmäßig in der Dichtung 33 des Filterelementes 41 unverschieblich fixiert. Die Durchbrechungen 31 können auch durch mehrere kreisrunde Lochungen gebildet sein.

Auf dieses Filterelement 41 folgt wieder eine Überströmplatte 38 usw., wie in Fig. 1 bzw. 8 angedeutet.

Wie aus Fig. 2 und 3 hervorgeht, liegen die quer zu der schlitzförmigen zentralen Durchbrechung 30 verlaufenden Überströmungskanäle 39 nach außen hin auf einer Ebene, haben jedoch unterschiedliche Tiefe, Breite und Länge.

Die sich aufgrund der Plattengeometrie und der gewählten schlitzartigen zentralen Durchbrechung 30 ergebenden unterschiedlichen Längen der Überströmkanäle 39 für das Retentat können durch fortlaufende Querschnittsverengung der Überströmkanäle 39 vom größten Durchmesser ausgehend zur Peripherie hin (Verkürzung der Länge der Überströmkanäle) ausgeglichen werden, um für eine gleichmäßige Wandschubspannung an der Membranoberfläche zu sorgen. Der damit gebildete Filterstapel 32 wird also nicht radial sondern von außen zur Mitte hin in Richtung des Retentatschlitzes 30,30′ parallel überströmt. Der Filterstapel 32 wird allseitig umströmt, so daß hier keine toten Ecken im Gehäuse 1,2 und auch nicht an den Überströmkanälen 39 bzw. Schächten 30,30′,31 entstehen. Dies ist besonders wichtig nach Reinigungszyklen. Das Retentat sowie auch das Permeat werden im Boden des Filtergehäuses 1,2 abgezogen.

Die Überströmplatten 38 sind anwendungsspezifisch vorzugsweise aus Kunststoff gespritzt oder als profiliert geätzte Edelstahlplatten und somit als wiederverwendbare Elemente ausgebildet. Bedarfsweise können mehrere aufeinanderge stapelte Filterelemente 41 und Überströmplatten 38 gemäß Fig. 8 durch Verbindungselemente zu Filtermodulen 32a zusammengefaßt werden, wie auch in Fig. 1 erkennbar, so daß deren Handhabung erleichtert wird. Diese Verbindungselemente können gemäß Fig. 8 zum Beispiel durch eine im Bereich der Durchbrechungen 31 auf der Außenseite angeordnete Umspritzung 40 aus Kunststoff oder Silikonmasse oder durch die Permeatschächte 31 im Bereich ihrer Stege angeordnete Klammern gebildet sein.

Die Auswahl der Flachfilterzuschnitte 36 bezüglich Porengröße bzw. Rückhaltevermögen, Material und Belastbarkeit richtet sich nach den zu behandelnden Fluiden. Die Spalthöhe zwischen zwei Flachfilterzuschnitten 36 und dazwischen liegenden Drainagezuschnitten 37 richtet sich ebenfalls nach den Erfordernissen der zu behandelnden Fluide und wird durch die Auswahl geeigneter Gewebestärken oder Vliesstärken sowie durch entsprechende Wahl der Dicke der Druckverteilungsmasken 34 erreicht. Als Vliese werden plane, gering kompressible Vliese mit guten Drainageeigenschaften bevorzugt. Diese können auch ein Laminat mit dem Filter 36 bilden. Bei diesen Vliesen kann gegebenenfalls auf die Verwendung der Druckverteilungsmasken 34 verzichtet werden.

Das Material der Druckverteilungsmasken 34 richtet sich nach dem Anwendungsfall, es sollte bevorzugt hart und inkompressibel sein, z.B. Polypropylen, Polyester, Metallfolie, PVDF, um zu verhindern, daß sich die Membran in die offen zu haltende Vlies- oder Gewebestruktur im Abströmbereich drückt. Die Stärke der Druckverteilungsmasken liegt je nach Anwendungsfall zwischen 50 und 150 $\mu$m.

Zur Erreichung eines geringen Druckabfalls zwischen Retentateingang 4 und Retentatausgang 3 wird bei der Filtration $CO_2$-haltiger Flüssigkeiten bevorzugt von außen nach innen überströmt, und zwar mit erhöhtem Betriebsdruck im Gehäuse 1,2 bei gleichzeitiger Drosselung des Filtratabgangs 5, um einen Druckanstieg auch auf der Permeatseite des Filtersystems zu erreichen. Dadurch wird ein Schäumen und Entgasen der Flüssigkeit vermieden.

Auch bei der Filtration von hochviskosen Flüssigkeiten wie Milch und Molken ist es vorteilhaft, von außen nach innen zu überströmen, damit der Druckverlust zwischen Retentateingang 4 und Retentatausgang 3 möglichst gering ist. Dadurch wird eine Deckschichtausbildung auf den Filterzuschnitten verzögert.

Die Spalthöhe zwischen den zu überströmenden Filterelementen 41 und Überströmplatten 38 bzw. Überströmkanälen 39 liegen zwischen 200 bis 1000 $\mu$m, je nach zu behandelndem Fluid.

Die Überströmplatte kann auch aus einer Überströmkanäle 39 und ebene Plattenkränze 38' aufweisenden geprägten Folie aus Kunststoff gebildet sein. Die Wellenberge der Überströmkanäle 39 stehen dabei einseitig oder beidseitig über die Ebene der Plattenkränze 38' über. Durch aufgelegte Ausgleichsmasken (34) in Form der Plattenkränze 38' lassen sich die in einer Ebenen liegende Auflageflächen für die Filterelemente 41 über die ganze Plattenebene erreichen.

Der Vorteil der erfindungsgemäßen Filtervorrichtung mit ihrem Überström- und Dichtungsprinzip ist außerdem in der Variabilität und Auswechselbarkeit der Zuschnitte und der Möglichkeit zu sehen, in einem geschlossenen Drucksystem mit variablen Betriebsdruck und Differenzdruck sich verschiedenen Filtrationsbedingungen ohne großen Aufwand anpassen zu können. Da die Summe der Anströmquerschnitte in der schlitzförmigen Durchbrechung 30,30' etwa gleich der der äußeren Anströmquerschnitte im Retentatraum 11 sind, ist auch problemlos eine Feedumkehr ohne Druckerhöhung im Retentatschacht 30,30' vorzunehmen, möglich. Durch das geschlossene System entstehen keine Leckverluste und dieses ist im Bereich der Biotechnologie im Hinblick auf Verkeimungsgefahr, Sekundärkontamination, Verschmutzung etc. wichtig.

## Ansprüche

1. Filterstapel für den Einbau in einer nach dem Crossflow-Prinzip betreibbare Filtervorrichtung für Fluide, der zwischen zwei Endplatten, von denen mindestens eine Fluidanschlüsse aufweist, in Dichtlage gehalten wird, aufweisend runde Flachfilterelemente und alternierend angeordnete, drainierende Stützelemente, wobei der Stapel aus Elementen im Zentrum eine schachtartige Durchbrechung und zwischen der mittigen Durchbrechung und der Peripherie über den Umfang verteilt mehrere schachtartige Durchbrechungen zur getrennten Führung von Retentat und Permeat aufweist, wobei die schachtartigen Durchbrechungen in der Endplatte mit den Fluidanschlüssen enden, dadurch gekennzeichnet , daß

- der Filterstapel (32) etwa in Durchmesserrichtung von einem schlitzartigen Schacht (30,30') zur Führung des Retentats durchsetzt ist, der in der die Fluidanschlüsse (3,4,5) aufweisenden Endplatte (2) mündet,

- im diametralen Endbereich der von dem schlitzartigen Schacht (30,30') nicht erfaßten Stapelfläche mindestens ein Permeatschacht (31) zur Abführung des Permeats aus der Ebene der Filterelemente (41) angeordnet ist, wobei die Permeatschächte (31) in der Endplatte (2) mit Anschlüssen (3,4,5) münden,

- die das partikelbelastete Fluid führenden Stützelemente (38) durch Überströmplatten (38) mit beidseitig angeordneten, quer zum schlitzartigen Schacht (30,30') verlaufenden Überströmkanälen (39) gebildet sind und

- jeweils zwei Filterzuschnitte (36) unter drainierender Beabstandung mittels eines Drainagevlieses (37) oder Gitters zwischen jeweils zwei Überströmplatten (38) zur Führung des Retentats und des Permeats angeordnet sind, und

- die Überströmkanäle (39) im eingebauten Zustand des Filterstapels peripherer in einem Fluiddruckraum (11) der Filtervorrichtung münden.

2. Filterstapel nach Anspruch 1, dadurch gekennzeichnet, daß die in der Ebene des Drainagevlieses (37) oder Gitters offen zu haltende Permeatschächte (31) bedarfsweise von einer zwischen den Filterzuschnitten (36) und der Drainageebene angeordneten dünnen Druckverteilungsmasken (34) eingfaßt sind.

3. Filterstapel nach Anspruch 1 und 2, dadurch gekennzeichnet, daß die Druckverteilungsmaske (34) eine Dicke von 50 bis 150 $\mu$m hat.

4. Filterstapel nach Anspruch 1 bis 3, dadurch gekennzeichnet, daß die Überströmplatten (38) für das Retentat aus Kunststoffpolymer gebildet sind.

5. Filterstapel nach Anspruch 4, dadurch gekennzeichnet, daß die Überströmplatte aus einer Überströmkanäle (39) und ebene Plattenkränze (38') aufweisenden geprägten Folie gebildet ist.

6. Filterstapel nach Anspruch 5, dadurch gekennzeichnet, daß die ebenen Plattenkränze (38') durch entsprechend ausgebildete Ausgleichsmasken etwa auf Plattenstärke im Bereich der Überströmkanäle (39) verstärkt sind.

7. Filterstapel nach Anspruch 1 bis 3, dadurch gekennzeichnet, daß die Peripherie und der Rand der schlitzförmigen Durchbrechung (30,30') zweier Filterzuschnitte (36) mit einschließendem Drainageelement (37) durch Verschweißung oder Klebung leckdicht eingefaßt sind.

8. Filterstapel nach Anspruch 1 bis 7, gekennzeichnet durch ein diesen und die Endplatten (2,9) einschließendes Druckgehäuse (1,2) mit mindestens drei Fluidanschlüssen (3,4,5) für die Überströmung des Filterstapels (14) nach dem Crossflow-Prinzip.

Fig. 1

Fig. 2

Fig. 3

EP 0 423 609 A1

Fig. 4

Fig. 5

Fig. 7

Fig. 6

*Fig. 8*

EP 0 423 609 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 238 737   (SEPAREX CORP.)<br>– – – | | B 01 D<br>63/08 |
| A | EP-A-0 078 667   (MEDICOSMOS ApS)<br>* Figuren 5,8 *<br><br>– – – | | |
| A | US-A-4 735 718   (J.E. PETERS)<br>– – – | | |
| A | US-A-3 932 283   (W.G. ESMOND)<br>– – – | | |
| A | GB-A-2 027 613   (COSTRUZIONI E. IMPIANTI)<br>– – – – – | | |

| | | | RECHERCHIERTE SACHGEBIETE (Int. Cl.5) |
|---|---|---|---|
| | | | B 01 D 63/00 |

Der vorliegende Recherchenbericht wurde für alle Patentansprüche erstellt

| Recherchenort | Abschlußdatum der Recherche | Prüfer |
|---|---|---|
| Den Haag | 12 November 90 | DEVISME F.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

---------------------------------------------------------------

` & : Mitglied der gleichen Patentfamilie, übereinstimmendes Dokument